# EUROPÄISCHE PATENTANMELDUNG

(11) **EP 1 367 030 A2**
(43) Veröffentlichungstag der Anmeldung: **03.12.2003**
(21) Anmeldenummer: 02022003.4
(22) Anmeldetag: 01.10.2002
(51) Int. Cl.: C03C 3/093, H01L 33/00, H01L 23/00, H05B 33/04

(54) **Bleifreie Glasrohre, deren Verwendung und Dioden**

(30) Priorität: 11.10.2001 DE 10150239
(71) Anmelder: Schott Glas, 55122 Mainz (DE); CARL-ZEISS-STIFTUNG trading as SCHOTT GLAS, 55122 Mainz (DE)
(72) Erfinder: Brix, Peter, 55116 Mainz (DE); Vetter, Helmar, 95666 Mitterteich (DE); Fritz, Oliver, 84032 Landshut (DE)

(57) **Zusammenfassung**

Die Erfindung betrifft bleifreie Glasrohre aus dem System SiO₂ - B₂O₃ - R₂O - BaO - ZnO - TiO₂ und deren Verwendung zur Kapselung von Dioden.

## Beschreibung

Die Erfindung betrifft bleifreie Glasrohre, deren Verwendung und Dioden.

Dioden sind Halbleiterbauelemente der Elektronik, die durch ihre asymmetrische stark stromrichtungsabhängige Strom-Spannungs-Kennlinie charakterisiert sind. Dioden werden überwiegend zur Gleichrichtung von Wechselströmen eingesetzt.

Übliche Dioden, insbesondere mit kleiner Leistung, bestehen aus einem an der Peripherie vorpassivierten Si-Chip, der einen Kontakt zwischen einem n-und einem p-Halbleiter aufweist, Anschlüssen aus Kupfermanteldrähten bzw. Kupfermantel-Kopfstiften und einem Glasrohr, das die Diode inklusive der Anschlussstellen verkapselt. Ein solcher Anschluss besteht aus einem Kern aus beispielsweise einer Ni/Fe-42- oder einer Ni/Fe-47-Legierung, die mit Kupfer ummantelt ist, das mit Cu₂O überzogen ist. Die Kontaktierung zwischen Chip und Anschlüssen erfolgt über Druck, der durch das Glasrohr aufrechterhalten wird.

Gläser zur hermetischen Verkapselung von Dioden, kurz Diodengläser, müssen in ihrer thermischen Dehnung und dem Verlauf der Viskosität mit der Temperatur an die verwendete Legierung der metallischen Zuleitungen angepaßt sein, damit es weder bei der Herstellung der Dioden noch bei Temperaturschwankungen im Betrieb zum Abplatzen des Glases vom Anschlussdraht kommt. Die Cu₂O-Schicht wirkt dabei als Haftvermittler zwischen Glas und Kupfermantel. Für eine schonende Verkapselung sollten die Viskositätswerte des Glases so sein, dass bei niedrigen Temperaturen und kurzen Verschmelzzeiten gearbeitet werden kann. Typische Zahlen sind hier ca. 10 Minuten bei ca. 630 °C. Ein Diodenglas sollte daher eine Verarbeitungstemperatur (Temperatur bei der Viskosität 10⁴ dPas) ≤ 850 °C, eine Erweichungstemperatur Ew ≤ 600 °C und eine Transformationstemperatur Tg ≤ 480 °C aufweisen. Da der Glasrohrabschnitt nach der Verschmelzung den Diodenkörper bildet, dessen Abmessungen vorgegeben sind und der gut bedruckbar sein soll, darf er sich bei der Verschmelzung trotz guter Anglasung nicht wesentlich verformen. Die Verschmelzung wird daher bei Temperaturen durchgeführt, bei denen das Glas eine Viskosität von ca. 10⁶ dPas aufweist.

Um eine ausreichende mechanische Belastbarkeit der Dioden zu gewährleisten, sollte das Diodenglas einen Elastizitätsmodul > 50 GPa besitzen. Würden Dioden mit einem Glas mit niedrigerem Elastizitätsmodul gekapselt, würden sie bei mechanischer Belastung in erhöhtem Maße zum Abplatzen von der Platine, auf der sie aufgelötet sind, neigen.

Diodengläser werden als Rohre produziert. Typische Abmessungen sind Außendurchmesser zwischen 1,1 mm und 4,5 mm; gängige Abmessungen sind derzeit insbesondere Außendurchmesser von 1,4 mm, 1,52 mm und 1,78 mm. Typische Innendurchmesser liegen zwischen 0,65 mm und 0,86 mm. Neben der häufigen runden Form des Außendurchmessers sind auch Dioden mit quadratischer Außenkontur bekannt. Sie und auch beliebige andere Außenkonturen sind auf übliche Weise herstellbar.

Für die Produktion des Glases als Rohr, auch speziell mit den genannten geringen Durchmessern, ist eine hohe Entglasungsstabilität erforderlich, damit es beim Rohrzug, z.B. an der Auslaufdüse, nicht zur Kristallbildung kommt. Ein Maß für die Entglasungsstabilität ist die Obere Entglasungstemperatur (Liquidustemperatur) OEG. Sie sollte, falls vorhanden, wenigstens 50 K unter der Verarbeitungstemperatur V_{A} liegen. Außerdem sollte, falls auftretend, die Wachstumsgeschwindigkeit der Kristalle möglichst klein sein. Im allgemeinen gibt es eine Temperatur Kgₘₐₓ (< OEG), bei der die Wachstumsgeschwindigkeit der Kristalle am größten ist (vₘₐₓ). v ₘₐₓ soll also möglichst klein sein.

Das Glas sollte weiter eine ausreichende Beständigkeit gegenüber den Waschprozessen bei der Rohrherstellung und der Diodenverarbeitung haben. Die ist bei einer Wasserbeständigkeit gemäß DIN ISO 719 der dritten Klasse gewährleistet.

Ein wesentliches Gütekriterium einer Diode ist ihre Stromspannungscharakteristik in Sperrrichtung. Hier sollen die Kurven bei der Überschreitung der Sperrspannung einen drastischen Anstieg ohne merkliche Kantenverrundung zeigen. Auch soll die Sperrspannung aller Dioden eines Typs denselben Wert aufweisen.
Das einkapselnde Glas darf also die Wirksamkeit der Diode nicht beeinträchtigen, d.h. es darf keine sie beeinträchtigenden Komponenten enthalten.

Diese Anforderungen werden von den kommerziell erhältlichen Dioden und Diodengläsern erfüllt. Diese Diodengläser sind alkaliarm, konkret bis auf übliche Verunreinigungen natrium- und lithiumfrei, können jedoch bis zu 5 Gew.-% K₂O enthalten, und sie sind mit einem Gehalt von bis zu 60 Gew.-% PbO hoch bleihaltig.
Da jedoch PbO als umweltbelastend Bestandteil der öffentlichen Diskussion ist und gesetzgeberische Bestrebungen das Verbot des Einsatzes dieser Komponente in elektrischen und elektronischen Geräten zum Ziel haben, besteht der Bedarf an PbO-freien Gläsern, die geeignet sind für die Kapselung von Dioden, sowie an bleifreien Dioden.
Durch den einfachen Austausch des Bleioxids gegen eine oder mehrere andere ausreichend verfügbare Bestandteile gelingt eine wirtschaftliche Reproduktion der durch PbO beeinflussten und gewünschten glastechnischen Eigenschaften nicht.

Wie Dioden bedürfen auch andere elektronische Geräte, wie z.B. Präzisionswiderstände, Keramik- oder Tantalkondensatoren oder LEDs der Verkapselung. An deren Gehäuse werden auch dieselben Anforderungen wie an die beschriebenen Diodengläser gestellt.

In der EP 1 156 020 A1 werden PbO-freie Diodengläser vorgeschlagen, welche als notwendige Bestandteile B₂O₃ und mindestens zwei Alkalimetalloxide, ausgewählt aus Li₂O, Na₂O und/oder K₂O enthalten. In Praxistests hat sich herausgestellt, dass der Nachteil dieser Gläser eine geringe Wasserbeständigkeit und hohe mechanische Anfälligkeit ist.

Es ist daher Aufgabe, ein bleifreies Glas für die Kapselung von elektronischen Geräten, insbesondere von Dioden bereitzustellen, d.h. ein bleifreies Glas, das die genannten Anforderungen erfüllt, das insbesondere ausreichend, kristallisationsstabil niedrig schmelzend, wasserbeständig und mechanisch belastbar ist.

Es ist weiter Aufgabe, eine bleifreie Diode, d.h. eine Diode mit bleifreier Verkapselung, zur Verfügung zu stellen.

Diese Aufgaben werden durch das in Anspruch 1 beschriebene Glasrohr, die in Anspruch 4 beschriebene Verwendung und die in Anspruch 5 beschriebene Diode gelöst.

Die erfindungsgemäßen bleifreien Glasrohre weisen folgende Zusammensetzung auf (in Gew.-% auf Oxidbasis):

SiO₂ 34 - 52, bevorzugt 38 - 50, besonders bevorzugt 38 - 47; B₂O₃ 10 - 25, bevorzugt 11 - 21, besonders bevorzugt 13 - 21; Al₂O₃ 0 - 25, bevorzugt 1 - 22, besonders bevorzugt 2 - 20, ganz besonders bevorzugt 2 - 12; Li₂O 2 - 6, bevorzugt 3 - 5; Na₂O 4 - 10, bevorzugt 5 - 9, besonders bevorzugt 5 - 8; K₂O 2 - 6, bevorzugt 3 - 5; CaO 0 - 4, bevorzugt 0 - 2, besonders bevorzugt 1 - 2; BaO 1 - 5, bevorzugt 1 - 3; ZnO 4 - 12, bevorzugt 6 - 12, besonders bevorzugt 6 - 10; TiO₂ 2 - 6, bevorzugt 3 - 5.

Weiter können die Gläser zur Verbesserung der Glasqualität ein oder mehrere an sich bekannte Läutermittel wie Sb₂O₃, As₂O₃, CeO₂, NaCI in den üblichen Mengen enthalten.

Die Gläser werden aus üblichen Rohstoffen erschmolzen und mit üblichen Rohrziehverfahren zu Glasrohren gezogen.

Glaszusammensetzungen der genannten Art sind bereits aus US 4,417,913 bekannt. Dort wird eine Glaszusammensetzung (in Gew.-% auf Oxidbasis) SiO₂ 40 - 50; Al₂O₃ 2 - 12; K₂O 2 - 6; Na₂O 5 - 9; Li₂O 2 - 6; CaO 0 - 4; ZnO 5 - 12; BaO 1 - 5; TiO₂ 2 - 6; B₂O₃ 13 - 21 beschrieben, die in Glas-Metall-Durchführungen als Druckglaseinschmelzung verwendet wird.

Solche Druckglasdurchführungen bestehen aus einem äußeren Metallgehäuse mit einem Loch, durch das wenigstens ein metallischer Innenleiter (Draht) geführt wird, und einem Glaslot, das die Öffnung zwischen Außengehäuse und Metalldraht ausfüllt und hermetisch abdichtet. Der thermische Ausdehnungskoeffizient des äußeren Metallteils ist wesentlich höher als der des Einschmelzglases und des Innenleiters. Dadurch gerät das Glas bei der Herstellung der Glas-Metall-Durchführung während der Abkühlung unter Druck und erzeugt so eine hermetische Einheit. Diese Druckvorspannung schützt zudem den Glaskörper vor mechanischen Belastungen. Bei Druckglaseinschmelzungen wird bei der Herstellung von Glaspulver bzw. - presslingen ausgegangen, die meist mit weiteren Komponenten zur Dehnungsanpassung, mit Bindemitteln und mit Haftvermittlern versetzt sind. Ein solches Pulver wird in einem Press-/Sinterverfahren zu Glasformkörpern entsprechende Geometrie verarbeitet, die mit metallischen Gehäusen und Kontakten verschmolzen werden und so die hermetische Abdichtung bilden.

Die Erfinder haben nun gefunden, dass überraschenderweise solche Gläser auch für die Herstellung über den Schmelzweg und sogar für die Verarbeitung durch den Rohrzug geeignet sind. Aufgrund ihrer Zusammensetzung und ihrer bisherigen Verwendung war nicht zu erwarten, dass sie eine den Anforderungen des Rohrzuges gerecht werdende Entglasungsstabilität besitzen.
Weiter haben die Erfinder gefunden, dass die erfindungsgemäßen Glasrohre für die Kapselung von Dioden und anderen elektronischen Geräten, z.B. Präzisionswiderständen, Keramik- oder Tantal-Kondensatoren oder LEDs, geeignet sind. Die Gläser ermöglichen aufgrund ihrer niedrigen Schmelz- und Verarbeitungstemperaturen eine schonende Verkapselung bei relativ niedrigen Temperaturen und beeinträchtigen überraschenderweise trotz ihres hohen Alkaligehalts die Funktion der Diode nicht. Das Glasrohr dient der Einhausung der Diode und gerät bei der Verschmelzung mit den metallischen Anschlussdrähten nicht unter Druckspannung.

Gegenüber der EP 1 156 020 A1 beinhalten die erfindungsgemäßen Gläser zwingend mindestens 2 Gew.-% TiO₂. Überraschender Weise hat sich gezeigt, dass durch den Anteil von TiO₂ die Wasserbeständigkeit und die Entglasungsstabilität verbessert, aber insbesondere auch der Elastizitätsmodul deutlich angehoben wird. Darüber hinaus wird durch TiO₂ ein überraschend niedriger thermischer Ausdehnungskoeffizient der erfindungsgemäßen Gläser ermöglicht.

### Ausführungsbeispiel:

Anhand der Ausführungsbeispiele soll die Erfindung mit ihren Vorteilen näher erläutert werden:
Ein Glas (Beispiel A) der Zusammensetzung (in Gew.-% auf Oxidbasis) SiO₂ 46, B₂O₃ 20, Al₂O₃ 2, Li₂O 4, Na₂O 8, K₂O 4, CaO 1, BaO 2, ZnO 9, TiO₂ 4 und 0,2 Sb₂O₃ (additive Angabe) wurden aus üblichen Rohstoffen bei 1280 °C erschmolzen, 30 min bei 1250 °C geläutert, 20 min bei 1100 °C gerührt. Ein weiteres Glas (Beispiel B) der Zusammensetzung (in Gew.-% auf Oxidbasis) SiO₂ 45,7, B₂O₃ 20,5, Al₂O₃ 2, Li₂O 4, Na₂O 7,8, K₂O 4, CaO 1, BaO 2, ZnO 9, TiO₂ 4 und 0,2 Sb₂O₃ wurden analog dem voranstehenden Beispiel erschmolzen, geläutert und gerührt. Anschließend wurden die Schmelzen bei 1100 °C 10 min abstehen gelassen und schließlich im Abwärtszug-Verfahren zu Rohr mit einem Außendurchmesser von 1,52 mm und einem Innendurchmesser von 0,86 mm ausgezogen. Aus diesen Glasröhrchen wurden durch Einschmelzen unter Stickstoff-Atmosphäre bei 630 °C für 10 min Dioden hergestellt. Diese zeigten auch nach einem Langzeittest, einem 1000-stündigen Klimatest, keine Ausfälle und sind gegenüber den mit herkömmlichen Bleigläsern eingekapselten Dioden gleichwertig. Dies betrifft sowohl die elektronischen Kenndaten - so zeigten aufgenommene Strom-Spannungskurven beispielsweise keine Kantenverrundung -, als auch die mechanische Belastbarkeit.

In Tabelle 1 sind für die Ausführungsbeispiele (A) und (B) sowie für die beiden kommerziell erhältlichen hochbleihaltigen Diodengläser der Anmelderin 8531 und 8532 die wesentlichen Eigenschaften angegeben, und zwar
- der thermische Ausdehnungskoeffizient α_{20/300} [10⁻⁶/K]
- die Dichte ρ [g/cm³]
- die Transformationstemperatur Tg [ °C]
- die Temperatur bei der Viskosität 10^{14,5} dPas T 14,5 [ °C]
- die Temperatur bei der Viskosität 10¹³ dPas T 13 [ °C]
- die Temperatur bei der Viskosität 10^{7,6} dPas T 7,6 [ °C]
- die Temperatur bei der Viskosität 10⁴ dPas T 4 [ °C]
- die Klasse W der Wasserbeständigkeit nach DIN ISO 719
- die Klasse S der Säurebeständigkeit nach DIN 12116
- die Klasse L der Laugenbeständigkeit nach DIN ISO 695
- der TK 100 [ °C]
- die Dielektrizitätskonstante DZ bei 1 MHz
- der Verlustwinkel tan δ bei 1 MHz [10⁻⁴]
- die Spannungsoptische Konstante K bei 588 nm [10⁻⁶mm² N⁻¹]
- der Elastizitätsmodul E [GPa]
- die Poissonzahl µ
- die Brechzahl n_{d}

Die physikalischen und chemischen Eigenschaften werden an aus der Schmelze gegossenen Blöcken gemessen.

**Tabelle 1**

| Eigenschaften des bleifreien Ausführungsbeispiels und der bleihaltigen Vergleichsbeispiele | | | | |
|---|---|---|---|---|
| | A | B | 8531 | 8532 |
| α_{20/300} [10⁻⁶/K] | 9,1 | 9,0 | 9,0 | 8,8 |
| ρ [g/cm³] | 2,668 | 2,661 | 4,34 | 4,47 |
| Tg [ °C] | 466 | 464 | 440 | 430 |
| T 14,5 [ °C] | 452 | 450 | 409 | 413 |
| T 13 [ °C] | 469 | 470 | 430 | 425 |
| T 7,6 [ °C] | 574 | 576 | 590 | 565 |
| T 4 [ °C] | 743 | 734 | 830 | 760 |
| W | 3 | 3 | 1 | 1 |
| S | 4 | 4 | 4 | 4 |
| L | 3 | 3 | 3 | 3 |
| TK 100 [ °C] | 276 | 278 | 450 | 440 |
| DZ | 7,3 | 7,3 | 9,5 | 10,2 |
| tan δ [10⁻⁴] | 24 | 25 | 9 | 9 |
| K [10⁻⁶mm² N^{- 1}] | 2,91 | 2,90 | 2,2 | 1,7 |
| E [GPa] | 85 | 85 | 52 | 56 |
| µ | 0,238 | 0,235 | 0,24 | 0,24 |
| n_{d} | 1,566 | 1,565 | 1,700 | 1,724 |

Für A und B konnten nach Temperzeiten von 5 min und 1 h im Gradientenofen keine Kristalle gefunden werden. Erst nach 24-stündiger Temperdauer konnte eine sehr geringe Kristallisation nachgewiesen werden (OEG 690 °C, verbunden mit einer sehr geringen vₘₐₓ von 0,54 µm/h bei 640 °C (Kgₘₐₓ).) Das Glas ist damit als sehr entglasungsstabil zu bezeichnen.

Der Funktionsvergleich zeigt, dass die erfindungsgemäßen bleifreien Diodengläser den herkömmlichen bleihaltigen Diodengläsern trotz ihrer unterschiedlichen dielektrischen Eigenschaften und ihrer unterschiedlichen Isolationswirkung ebenbürtig sind. Hinsichtlich der mechanischen Belastbarkeit, die sich im E-Modul widerspiegelt, sind sie ihnen überlegen. Auch ihre deutlich geringere Dichte ist vorteilhaft.

Ihre Zugehörigkeit zur Wasserbeständigkeitsklasse 3 ist für Herstellung und Verwendung ausreichend gut.
Die erfindungsgemäßen Diodengläser besitzen Verarbeitungstemperaturen V_{A} ≤ 850 °C, Erweichungstemperaturen Ew ≤ 600 °C und Transformationstemperaturen Tg ≤ 480 °C.

Damit sind sie niedrigschmelzend und für eine schonende Verkapselung bei relativ niedrigen Temperaturen von Dioden und anderen elektronischen Geräten, also einem Verschmelzen mit den Anschlussdrähten, hervorragend geeignet.

Auch ihre thermische Dehnung ist mit α_{20/300} zwischen 8,6 10⁻⁶/K und 9,2 10⁻⁶/K an die üblicherweise als Anschlussdrähte verwendeten Materialien gut angepasst.

Die erfindungsgemäßen Diodengläser sind sehr entglasungsstabil und daher mittels Rohrziehverfahren als Glasrohre erhältlich.

Die erfindungsgemäßen bleifreien Dioden sind den herkömmlichen bleihaltigen Dioden ebenbürtig, auch in der Wirtschaftlichkeit ihrer Herstellung.

Der wesentliche Vorteil ist, dass sowohl die Glasrohre als auch die Dioden ohne Verschlechterung der benötigten Eigenschaften PbO-frei und damit umweltschonend sind und hergestellt werden.

## Patentansprüche

1. Bleifreies Glasrohr mit einer Zusammensetzung (in Gew.% auf Oxidbasis) von:
| | |
|---|---|
| SiO₂ | 34 - 52 |
| B₂O₃ | 10 - 25 |
| Al₂O₃ | 0 - 25 |
| Li₂O | 2 - 6 |
| Na₂O | 4 - 10 |
| K₂O | 2-6 |
| CaO | 0 - 4 |
| BaO | 1 - 5 |
| ZnO | 4 - 12 |
| TiO₂ | 2 - 6 |
sowie ggf. übliche Läutermittel in üblichen Mengen.

2. Bleifreies Glasrohr nach Anspruch 1
**gekennzeichnet durch**
folgende Zusammensetzung (in Gew.% auf Oxidbasis):
| | |
|---|---|
| SiO₂ | 38 - 50 |
| B₂O₃ | 11 - 21 |
| Al₂O₃ | 1 - 22 |
| Li₂O | 3 - 5 |
| Na₂O | 5 - 9 |
| K₂O | 3 - 5 |
| CaO | 1 - 2 |
| BaO | 1 - 3 |
| ZnO | 6 - 12 |
| TiO₂ | 3 - 5 |
sowie ggf. übliche Läutermittel in üblichen Mengen.

3. Bleifreies Glasrohr nach Anspruch 1 oder 2 **gekennzeichnet durch**
folgende Zusammensetzung (in Gew.% auf Oxidbasis):
| | |
|---|---|
| SiO₂ | 38 - 47 |
| B₂O₃ | 13 - 21 |
| Al₂O₃ | 2 - 20 |
| Li₂O | 3 - 5 |
| Na₂O | 5 - 8 |
| K₂O | 3 - 5 |
| CaO | 1 - 2 |
| BaO | 1 - 3 |
| ZnO | 6 - 10 |
| TiO₂ | 3 - 5 |
sowie ggf. übliche Läutermittel in üblichen Mengen.

4. Verwendung eines Glasrohres nach wenigstens einem der Ansprüche 1 bis 3 zur Kapselung von elektronischen Geräten, insbesondere von Dioden.

5. Diode,
**dadurch gekennzeichnet,**
**dass** sie mit einem Glasrohr gemäß wenigstens einem der Ansprüche 1 bis 3 gekapselt ist.
